# EUROPÄISCHE PATENTSCHRIFT

(11) **EP 3 046 959 B1**
(45) Veröffentlichungstag und Bekanntmachung des Hinweises auf die Patenterteilung: **19.07.2017**
(21) Anmeldenummer: 14765930.4
(22) Anmeldetag: 12.09.2014
(51) Int. Cl.: C08K 3/04, C08K 5/00, C08L 25/12

(54) **TIEFSCHWARZE THERMOPLASTISCHE FORMMASSEN MIT HOHEM GLANZ UND DEREN HERSTELLUNG**
DEEP BLACK THERMOPLASTIC MOLDING COMPOSITIONS HAVING HIGH GLOSS AND PRODUCTION THEREOF
MATIÈRES À MOULER THERMOPLASTIQUES NOIR FONCÉ À BRILLANCE ÉLEVÉE ET LEUR PRODUCTION

(30) Priorität: 16.09.2013 EP 13184569
(43) Veröffentlichungstag der Anmeldung: 27.07.2016
(73) Patentinhaber: INEOS Styrolution Group GmbH, 60325 Frankfurt (DE)
(72) Erfinder: BÖCKMANN, Philipp, 67098 Bad Dürkheim (DE); MOSBACH, Norbert, 67133 Maxdorf (DE); JAHNKE,Eike, 60437 Frankfurt (DE)
(74) Vertreter: Jacobi, Markus Alexander
(86) Internationale Anmeldenummer: PCT/EP2014/069473
(87) Internationale Veröffentlichungsnummer: WO 2015/036526

(56) Entgegenhaltungen:
- DE-A1- 4 411 067
- US-A1- 2008 103 267
- US-A1- 2008 306 204

## Beschreibung

Die Erfindung betrifft die Herstellung und Verwendung von tiefschwarz eingefärbten polymeren Formmassen. Durch den Einsatz mehrerer Komponenten kann ein optimierter Tiefenglanz bei amorphen und teilkristallinen, transparenten thermoplastischen Zusammensetzungen erreicht werden.

Die Einfärbung verschiedener Thermoplasten wird im Stand der Technik beschrieben, jedoch ist die Herstellung von tiefschwarzen Formmassen bislang problematisch. Aus EP-A 1685192 ist eine Polymer-Zusammensetzung bekannt, die für Laserbeschriftungen verwendet wird und die einen Kautschuk-Latex sowie ein schwarzes Pigment und einen Farbstoff enthält. Aus US 2005/0014863 und US 7077898 sind pigmenthaltige Polymerzusammensetzungen bekannt, die "carbon black" und ein weiteres, durch eine allgemeine Formel beschriebenes Pigment enthalten.

US 2008/306204 A1 beschreibt schwarze thermoplastische Formmassen enthaltend 20 bis 80 Gew.-Teile Polyarylenether und 20 bis 80 Gew.-Teile Styrolpolymer wie u.a. Polymermischungen aus 39,3 Gew.-Teilen PPE, 25 Gew.-Teilen HIPS, 35,3 Gew.-Teilen Homopolystyrol, 1,5 - 3,0 Gew.-Teilen eines Pigmentrusses und 1 Gew.-Teil zweier in der Formmasse löslicher Farbstoffe.

DE 44 11 067 A1 offenbart eine dunkle Polymerformmasse enthaltend 99,9 bis 50 Gew.-% einer Polymermatrix und 0,1 bis 3 Gew.-% einer Färbemittelkombination aus organischen Farbstoffen/Pigmenten und anorganischen Pigmenten gleicher Farbe und Russ enthalten. Als Polymere sind in der Formmasse vorzugsweise Polyamide, Polyester, Polycarbonate oder Polymethacrylate enthalten.

Schwarztöne werden in Formmassen oft durch Verwendung von Pigmentruß ("pigment black") erstellt. Rußmengen zwischen 0,1 % und 5 % werden vorgeschlagen, um Polymere schwarz einzufärben, jedoch lässt sich kein tiefschwarz erreichen. Die mittels dieser Methode eingefärbten Polymere zeigen nur einen normal schwarzen Farbeindruck mit L*-Werten von 3,0 bis 10,0 (gemessen nach DIN 5033, Messmethode zur Farbmessung (z.B. 2009); diffus / 8 grad, exklusive Glanz), bei einem geringen Glanzniveau von unter 97 bei sowohl 20 / 60 / 85 Grad Messwinkel.

Eine Aufgabe der vorliegenden Erfindung ist es, thermoplastische Formmassen bereitzustellen, die zum einen eine tief-schwarze Farbe aufweisen, die es auch für dünne Formteile ermöglicht, einen schwarzen Farbeindruck hervorzurufen. Zum anderen sollen die Formmassen auch zu einem hohen Glanz bei den Formteilen führen, wobei dieser Glanz auch nach Bewitterung (u.a. Wärme, Feuchtigkeit) erhalten bleibt.

Als Basis-Polymere können verschiedene thermoplastische Copolymere als Komponente A der Zusammensetzung (Formmasse) eingesetzt werden. Diese Polymere sind vorzugsweise transparent und können dabei sowohl amorph (wie Styrolpolymere (z.B. SAN), Polystyrol (PS), Polymethylmethacrylate (PMMA), Polyalkylmethacrylate, Polycarbonate, Polyestercarbonate) als auch teilkristallin (transparentes Polypropylen, PP) sein.

Erfindungsgemäß können verschiedene Einfärbungen erstellt werden, welche einen sehr hohen Schwarzgrad ("tiefschwarz") bzw. einen sehr geringen L* -Wert nach DIN 5033 aufweisen. Unter tiefschwarz werden hier Zusammensetzungen beschrieben, die einen L* -Wert nach DIN 5033 von 0,4 bis 2 aufweisen. Oftmals können die erfindungsgemäßen Formmassen sogar einen L*-Wert von 0,4 bis 1, insbesondere von 0,4 bis 0,9 aufweisen.

Unter transparenten Polymeren werden solche verstanden, die bei einer Schichtdicke von 2 mm nach DIN 14782 (Technische Baubestimmungen) einen maximalen Haze-Wert von 25 % zeigen.

Der für die praktischen Anwendungen wichtige Glanzwert der aus den thermoplastischen Formmassen hergestellten Produkte kann beispielsweise über den Glanzwert, gemessen nach DIN 67530 (Reflektometer-Bestimmung, 1982), bestimmt werden. Auch eine sehr gute Verarbeitbarkeit der erfindungsgemäßen Formmassen im Spritzguss ist für die Praxis wichtig. Daher sollen die Formmassen gute Fließeigenschaften beim Einspritzen, eine hohe Stabilität beim Abkühlen und Entformen sowie eine gute Beständigkeit unter Umwelteinflüssen haben.

Im Stand der Technik war auch kein Verfahren bekannt, tiefschwarze Formmassen mit hohem Glanz und guter Verarbeitbarkeit herzustellen. Auch sollen die daraus produzierten Formteile witterungsbeständig sein, d.h. auch nach längerer Belastung mit UV-Strahlung, Feuchtigkeit und höherer Temperatur nicht den Glanz und die tiefschwarze Farbe verlieren.

Die vorliegende Erfindung betrifft daher schwarze thermoplastische Formmassen mit hohem Glanz, enthaltend (bzw. bestehend aus):
a) 90 bis 99,5 Gew.-% eines oder mehrerer Styrol-Copolymere als Komponente A1, ,
b) 0,01 bis 5 Gew.-% eines Pigmentrußes als Komponente B,
c) 0,1 bis 1,5 Gew.-% mindestens zweier, in der Formmasse löslicher Farbstoffe als Komponente C,
d) 0 bis 5 Gew.-% eines oder mehrerer Zusatzstoffe, die von den Komponenten B und C verschieden sind, als Komponente D,
wobei die thermoplastischen Formmassen einen tiefschwarzen Farbeindruck mit L*-Werten von 0,5 bis 2,0 (nach DIN 5033) und einen hohen Glanz von über 98 (nach DIN 67530) haben, und
wobei die Gewichtsprozente jeweils auf das Gesamtgewicht der Komponenten A bis D bezogen sind und zusammen 100 Gewichtsprozent ergeben.

Die Erfindung betrifft insbesondere tiefschwarze thermoplastische Formmassen mit hohem Glanz enthaltend (bzw. bestehend aus):
90 bis 99,5 Gew.-% eines oder mehrerer Styrol-Copolymere als Komponente A1,
0,01 bis 5 Gew.-% eines Pigmentrußes als Komponente B,
0,1 bis 1,5 Gew.-% mindestens zweier, in der Formmasse löslicher Farbstoffe als Komponente C,
0 bis 5 Gew.-%, insbesondere 0,1 bis 5 Gew.-% eines oder mehrerer Zusatzstoffe, die von den Komponenten B und C verschieden sind, als Komponente D,
wobei die thermoplastischen Formmassen einen tiefschwarzen Farbeindruck mit L*-Werten von 0,5 bis 2,0 (nach DIN 5033) und einen hohen Glanz von über 98 (nach DIN 67530) haben, und
wobei die Gewichtsprozente jeweils auf das Gesamtgewicht der Komponenten A bis D bezogen sind und zusammen 100 Gewichtsprozent ergeben.

Gegenstand der Erfindung sind auch thermoplastische Formmassen, bei denen die Komponente C mindestens drei unterschiedliche Farbstoffe umfasst, die komplementäre Farbbereiche abdecken.

Gegenstand der Erfindung sind auch thermoplastische Formmassen, bei denen die Formmasse als Komponente B 0,01 bis 5 Gew.-% eines Pigmentrußes enthält, der eine mittlere Primärteilchengröße im Bereich von 5 bis 100 nm, vorzugsweise 7 bis 60 nm aufweist.

Gegenstand der Erfindung sind auch thermoplastische Formmassen, bei denen man als Komponente A ein Copolymer aus Acrylnitril, Styrol und/oder α-Methylstyrol, Phenylmaleinimid, Maleinsäureanhydrid, Methacrylsäuremethylester oder deren Mischungen einsetzt. Insbesondere ist A1 ein Copolymer aus Acrylnitril, Styrol und/oder α-Methylstyrol, wie SAN oder AMSAN.

Gegenstand der Erfindung sind auch thermoplastische Formmassen, bei denen die Komponente C mindestens drei unterschiedliche Farbstoffe umfasst, die komplementäre Farbbereiche abdecken. Gegenstand der Erfindung sind auch thermoplastische Formmassen, bei denen die Formmasse als Komponente B 0,01 bis 5 Gew.-% eines Pigmentrußes enthält, der eine mittlere Primärteilchengröße im Bereich von 5 bis 100 nm, vorzugsweise 7 bis 60 nm aufweist.

Gegenstand der Erfindung sind auch thermoplastische Formmassen, bei denen man als Komponente A ein Copolymer aus Acrylnitril, Styrol und/oder α-Methylstyrol einsetzt und der Gewichtsanteil von Acrylnitril bezogen auf Komponente A 19 bis 39 Gew.-% beträgt.

Gegenstand der Erfindung sind auch thermoplastische Formmassen, bei denen als Komponente A ein Styrol / Acrylnitril-Copolymer oder ein α-Methyl-Styrol / Acrylnitril-Copolymer eingesetzt wird.

Gegenstand der Erfindung sind auch thermoplastische Formmassen, bei denen als Komponente A ein transparentes Styrol / Acrylnitril-Copolymer oder ein transparentes α-Methyl-Styrol / Acrylnitril-Copolymer mit einer Schmelzevolumenrate (MVR, 220/3.8) von 4 bis 22 cm³/10 min eingesetzt wird.

Gegenstand der Erfindung sind auch thermoplastische Formmassen, bei denen als Komponente A ein Styrol / Methacrylsäuremethylester-Copolymer eingesetzt wird, wobei der Gewichtsanteil MMA, bezogen auf Komponente A, bei 19 bis 31 Gew.-% liegt.

Gegenstand der Erfindung sind auch thermoplastische Formmassen, bei denen der Gewichtsanteil von B 0,05 bis 3 Gew.-% beträgt.

Gegenstand der Erfindung sind auch thermoplastische Formmassen, bei denen der Gewichtsanteil von C 0,5 bis 1,2 Gew.-% beträgt.

Gegenstand der Erfindung sind thermoplastische Formmassen, die einen tiefschwarzen Farbeindruck mit L*-Werten von 0,5 bis 2,0 aufweisen.

Gegenstand der Erfindung sind auch thermoplastische Formmassen, bei denen die Komponenten B zu C im Gewichtsverhältnis von 3:1 bis 1:15 einsetzt werden.

Die Erfindung betrifft auch die Verwendung der genannten thermoplastischen Formmassen zur Herstellung von Formteilen mit tiefschwarzer Oberfläche und hohem Glanz für den Einsatz bei Kraftfahrzeugen, Haushaltsgeräten, Elektrogeräten, Zierleisten und Außenverkleidungen. Gegenstand der Erfindung ist auch die Verwendung der thermoplastischen Formmassen im Außenbereich von Kraftfahrzeugen, wie z.B. A-, B-, C- oder D-Säulen-abdeckungen, Spoiler, Fensterrahmen, Deckleisten, Abdeckhaube und Abdeckplatten oder als Teil des Kühlergrills, der Antennenverkleidung, des Seitenspiegels oder der Vor- und Rückleuchten einsetzt.

Die Erfindung betrifft auch ein Verfahren zur Herstellung einer thermoplastischen Formmasse, wie oben beschrieben, bei dem man die Komponenten A, B und C, sowie ggf. D miteinander vermischt, beispielsweise unter Wärmeeinwirkung im Extruder.

In einer Ausführungsform der Erfindung wird für die thermoplastischen Formmassen als Komponente A1 ein Copolymer aus Acrylnitril, Styrol und/oder α-Methylstyrol, Phenylmaleinimid, Maleinsäureanhydrid, Methacrylsäuremethylester oder deren Mischungen einsetzt. Insbesondere ist A1 ein Copolymer aus Acrylnitril, Styrol und/oder α-Methylstyrol. Dabei beträgt der Gewichtsanteil von Acrylnitril im Copolymer, bezogen auf Komponente A1, oftmals von 19 bis 39 Gew.-%.

Bevorzugt wird eine thermoplastische Formmasse, wobei als Komponente A1 ein Styrol /Acrylnitril-Copolymer oder ein α-Methyl-Styrol /Acrylnitril-Copolymer eingesetzt wird. Als Komponente A wird häufig ein transparentes Styrol /Acrylnitril-Copolymer oder ein transparentes α-Methyl-Styrol /Acrylnitril-Copolymer mit einer Schmelzevolumenrate (MVR, 220/10) von 4 bis 22 cm3/10 min eingesetzt. Die Bestimmung des MVR-Werts kann im Kapillar-Rheometer nach ISO 1133 erfolgen. Als Beispiel kann das SAN-Produkt Luran® der Styrolution (Frankfurt/Main) genannt werden (siehe Luran® HH-120; AMSAN für Spritzguss).

Gegenstand sind auch thermoplastische Formmassen, wobei als Komponente A1 ein Styrol / Methacrylsäuremethylester-Copolymer eingesetzt wird, wobei der Gewichtsanteil MMA im Copolymer, bezogen auf Komponente A1, bei 19 bis 31 Gew.-% liegt.

Die thermoplastischen Formmassen gemäß der Erfindung enthalten als Komponente B mindestens einen Pigmentruß. Die Formmasse enthält dabei vorzugsweise 0,01 bis 5 Gew.-%, bezogen auf die gesamte Zusammensetzung, eines Pigmentrußes.
Dieser Pigmentruß hat vorzugsweise eine mittlere Primärteilchengröße im Bereich von 5 bis 100 nm, vorzugsweise 7 bis 60 nm. Typische Ruß-Komponenten für den erfindungsgemäßen Einsatz haben einen Kohlenstoffgehalt von größer 95 Gew.-% und eine spezifische Oberfläche von größer 100 m2/g.

### Typische Handelsprodukte sind beispielsweise Printex 60, oder Printex 90 (Orion Engineered Carbons GmbH)

Gegenstand der Erfindung sind auch die oben genannten thermoplastischen Formmassen, wobei der Gewichtsanteil von Komponente B von 0,05 bis 3 Gew.-%, oftmals von 01,1 bis 2 Gew.-%, bezogen auf die gesamte Zusammensetzung, beträgt.

Die erfindungsgemäßen thermoplastischen Formmassen enthalten ferner eine Komponente C, wobei der Gewichtsanteil von Komponente C von 0,1 bis 1,5 Gew.-%, vorzugsweise von 0,5 bis 1,2 Gew.-% beträgt. Die Komponente C beinhaltet dabei zwei oder mehrere Farbstoffe, die in der Formmasse löslich sind. Die thermoplastischen Formmassen enthalten bevorzugt als Komponente C mindestens drei unterschiedliche Farbstoffe, häufig drei oder vier, die komplementäre Farbbereiche abdecken.

Die Art dieser zwei, drei oder vier Farbstoffe, die oftmals komplementäre Farbbereiche abdecken, wird häufig so gewählt, dass in der Kombination ein Schwarz erzeugt wird. Derartige Farbstoffe sind dem kundigen Farbspezialisten ("Coloristen") bekannt. Beispielsweise kann bereits die Kombination eines Rotfarbstoffes und eines komplementären Grünfarbstoffes ein Schwarz ergeben. So kann z.B. der bekannte Farbstoff Solvent Red 135 in Kombination mit dem bekannten Farbstoff Solvent Green 28 eingesetzt werden, um eine schwarze Einfärbung zu erreichen.

Erfindungsgemäß kann auch die Kombination eines Blaufarbstoffes mit einem komplementären Gelbfarbstoff zur Erzeugung von Schwarz eingesetzt werden. Ein Beispiel wäre die Kombination von Solvent Blue 97 mit Dispers Yellow 54, die beide per se bekannt sind.

Kombinationen von mehr als zwei Farbstoffen (als Komponente C) sind bevorzugt. Damit können unerwünschte Farbtönungen der Schwarzfarbe in die gewünschte Richtung nuanciert (oder vermieden) werden. Ein Beispiel für die Komponente C ist die Kombination von Solvent Red 135 mit Solvent Green 28 mit Disperse Yellow 201.

Eine erfindungsgemäß besonders bewährte Kombination für die Komponente C ist die Kombination des blauen Farbstoffs Solvent Violet 13 mit dem gelben Farbstoff Solvent Yellow 93 und dem violetten Farbstoff Solvent Violet 59. Nachfolgend werden diese Anthrachinon- bzw. Pyrrazol-Farbstoffe mit der jeweiligen Struktur gezeigt.

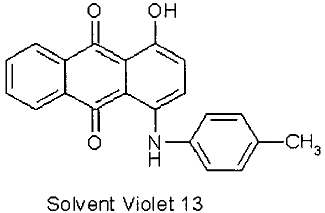

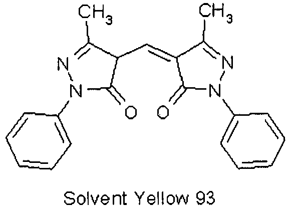

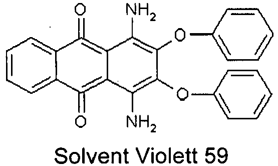

Gegenstand der Erfindung sind auch thermoplastische Formmassen, wobei diese einen tiefschwarzen Farbeindruck mit L*-Werten von 0,4 bis 2,0, oftmals 0,4 bis 1,0 aufweisen. Auch Formmassen mit geringem oder keinem Changier-Effekt sind Gegenstand der Erfindung. Changier-Effekte, auch als Goniochromie bezeichnet, können durch eine möglichst kleine Eindringtiefe vermieden werden, je kleiner die Eindringtiefe desto geringer der Changier-Effekt. Die Eindringtiefe kann mittels der bekannten Kubelka-Munk-Theorie bei gegebener Farbrezeptur berechnet werden (Paul Kubelka, Franz Munk: Ein Beitrag zur Optik der Farbanstriche. In: Zeitschrift für technische Physik. 12, 1931, S. 593-601).

Bei den erfindungsgemäßen thermoplastischen Formmassen werden die Komponenten B zu C oftmals im Gewichtsverhältnis von 2:1 bis 1:20 einsetzt, insbesondere von 1:1 bis 1. 15.

Gegenstand der Erfindung ist auch die Herstellung der tiefschwarzen Formmassen durch Mischen der Komponenten (z.B. in Mischungsvorrichtungen wie Extrudern) sowie die Verwendung der thermoplastischen Formmassen zur Herstellung von Formteilen mit tiefschwarzer Oberfläche und hohem Glanz für den Einsatz bei Kraftfahrzeugen, Haushaltsgeräten, Elektrogeräten, Zierleisten und Außenverkleidungen. Auch betrifft die Erfindung die Verwendung der thermoplastischen Formmassen im Außenbereich von Kraftfahrzeugen. Sie werden eingesetzt z.B. für A-, B-, C- oder D-Säulen-Abdeckungen, Spoiler, Fensterrahmen, Deckleisten, Abdeckhaube und Abdeckplatten oder als Teil des Kühlergrills, der Antennenverkleidung, des Seitenspiegels oder der Vor- und Rückleuchten.

### Zur Komponente A

Als Polymer-Komponente A sind erfindungsgemäß grundsätzlich alle dem Fachmann bekannten und in der Literatur beschriebenen transparenten thermoplastischen Polymere geeignet, wie z.B. als Komponente A1:
Styrol-Acrylnitril-Copolymere, α-Methylstyrol-Acrylnitril-Copolymere, Styrol-α-Methylstyrol-Acrylnitril-Terpolymere,N-Phenylmaleinimid-Styrol-Copolymere, N-Phenylmaleinimid-Styrol-Acrylnitril-Terpolymere, Maleinsäureanhydrid-Styrol-Copolymere, Maleinsäureanhydrid-Styrol-Acrylnitril-Terpolymere und Styrol-Methylmethacrylat-Copolymere.

Als Komponente A2 kommen insbesondere handelsübliche Polymethylmethacrylat (PMMA) in Betracht. Als Komponenten A3 eignen sich insbesondere handelsübliche, transparente Polycarbonate (PC) und Polyestercarbonate.

Auch Blends aus den Komponenten A1 und/oder A2 und/oder A3 sind gemäß einer besonderen Ausführungsform einsetzbar. In diesem Falle beträgt die Gesamtmenge an A1, A2 und A3 dann 90 bis 99,5 Gew.-% der thermoplastischen Zusammensetzung. Typische Beispiele sind A1 plus A2 oder A1 plus A3. Auch Polystyrol ist als Komponente A im Prinzip geeignet.

Bevorzugte Polymere A1 sind aufgebaut aus 50 bis 90 Gew.-%, bevorzugt 60 bis 85 Gew.-%, insbesondere 65 bis 81 Gew.-%, Styrol und 10 bis 50 Gew.-%, bevorzugt 15 bis 39 Gew.-%, insbesondere 19 bis 35 Gew.-% Acrylnitril sowie 0 bis 5 Gew.-%, bevorzugt 0 bis 4 Gew.-%, insbesondere 0 bis 3 Gew.-% weitere Monomere, wobei die Gew.-% jeweils bezogen sind auf das Gewicht der Komponente A1 und zusammen 100 Gew.-% ergeben. Die Viskositätszahl beträgt häufig 55-85 ml/g (VZ; gemessen in 0,5 %iger Toluol-Lösung bei 20°C). Die Molmasse (Mw) ist häufig im Bereich von 110.000 bis 190.000 g/Mol. Sie kann nach üblichen Methoden für SAN-Copolymere bestimmt werden.

Weiterhin bevorzugte Polymere A1 sind aufgebaut aus 50 bis 90 Gew.-%, bevorzugt 61 bis 81 Gew.%, insbesondere 65 bis 78 Gew.-%, α-Methylstyrol und 10 bis 50 Gew.-%, bevorzugt 19 bis 39 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das gesamte Gewicht von A1 und zusammen 100 Gew.-% ergeben. Viskositätszahl,: 45-70 ml/g (VZ; gemessen in 0,5 %iger Toluol-Lösung bei 20°C).

Ebenfalls bevorzugte Polymere A1 sind aufgebaut aus 50 bis 90 Gew.-%, bevorzugt 60 bis 80 Gew.%, insbesondere 65 bis 78 Gew.-%, N-Phenylmaleinimid und 10 bis 50 Gew.-%, bevorzugt 19 bis 39 Gew.-%, insbesondere 22 bis 35 Gew.-%, Styrol bzw. Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht und zusammen 100 Gew.-% ergeben.

Weiterhin bevorzugte Polymere A1 sind aufgebaut aus 50 bis 90 Gew.-%, bevorzugt 60 bis 85 Gew.%, insbesondere 70 bis 85 Gew.-%, Styrol und 10 bis 50 Gew.-%, bevorzugt 15 bis 40 Gew.-%, insbesondere 15 bis 30 Gew.-%, Methylmethacrylat sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das gesamte Gewicht von A1 und zusammen 100 Gew.-% ergeben. Viskositätszahl: 50-70 ml/g (VZ; gemessen in 0,5 %iger Toluol-Lösung bei 20°C).

Bevorzugte Polymere A2 sind transparente Polymethylmethacrylate, sowie schwach vernetzte Polymethylmethacrylate, die 5 bis 20 Gew.-% Hydroxy- und/oder EpoxyGruppen haltige Acrylat Einheiten enthalten. Entsprechende Ethylacrylate und Butylacrylate sind auch geeignet.

Als Komponente A3 wird in den erfindungsgemäßen Formmassen ein halogenfreies-Polycarbonat eingesetzt. Geeignete halogenfreie Polycarbonate sind beispielsweise solche auf Basis von Diphenolen der allgemeinen Formel (VII): 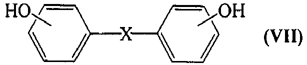 worin X eine Einfachbindung, eine C₁- bis C₃-Alkylen-, eine C₂- bis C₃-Alkyliden-, eine C₃- bis C₆-Cycloalkyliden-Gruppe, sowie -S- oder -SO₂- bedeuten kann.

Bevorzugte Diphenole der Formel (VII) sind beispielsweise Hydrochinon, Resorcin, 4,4'-Dihydroxyphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Co-Polycarbonate sind als Komponente A3 geeignet, bevorzugt sind neben dem Bisphenol A-Homopolycarbonat die Copolycarbonate von Bisphenol A. Die geeigneten Polycarbonate können linear aufgebaut aber auch in bekannter Weise verzweigt sein, und zwar vorzugsweise durch den Einbau von 0,05 bis 2 mol-%, bezogen auf die Summe der eingesetzten Diphenole, an mindestens einer trifunktionellen Verbindung, beispielsweise solchen mit drei oder mehr als drei phenolischen OH-Gruppen.

Als besonders geeignet haben sich Polycarbonate erwiesen, die relative Viskositäten ηᵣₑₗ von 1,1 bis 1,5, insbesondere 1,2 bis 1,4, aufweisen. Dies entspricht mittleren Molekulargewichten Mw (Gewichtsmittelwert) von 10 000 bis 200 000, vorzugsweise von 15 000 bis 80 000, bzw. Viskositätszahlen von 20 bis 100 ml/g, insbesondere 40 bis 80 ml/g, gemessen nach der Norm DIN 53727 an einer 0,5 Gew.-%igen Lösung in Methylenchlorid bei 23°C. Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an sehr geringen ppm-Mengen (z.B. 5 ppm) an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbaren Chlor sind halogenfreie Polycarbonate im Sinne der vorliegenden Erfindung.

Die transparenten Polymere A lassen sich nach bekannten Methoden herstellen. Sie lassen sich z. B. durch radikalische Polymerisation, durch Emulsions-, Suspensions-, Lösungs- oder Massepolymerisation herstellen. So können die Polymere z. B. ganz allgemein nach einem Lösungspolymerisations-Verfahren hergestellt werden, wie es beispielhaft im Kunststoff-Handbuch, Hrsg. Vieweg-Daumiller, Band V (Polystyrol), Carl-Hanser-Verlag, München, 1969, Seite 124, beschrieben wird.

Die Herstellung der erfindungsgemäßen Formmassen aus den Komponenten A, B und C, sowie ggf. D kann nach jeder beliebigen Weise nach allen bekannten Methoden erfolgen. Vorzugsweise erfolgt jedoch das Abmischen der Komponenten A, B und C sowie ggf. D durch Schmelze-Vermischung, beispielsweise gemeinsames Extrudieren (ZSK 30 Doppelschneckenextruder der Fa. Werner & Pfleiderer), Kneten oder Verwalzen der Komponenten, z. B. bei Temperaturen im Bereich von 160 bis 300°C, bevorzugt von 180 bis 280°C.

### Zur Komponente B

Transparente thermoplastische Copolymere, wie z. B. SAN, AM-SAN und deren Mischungen, können mittels einer Kombination aus Farbstoffen (Komponente C) und geringen Mengen an Ruß (Komponente B) dauerhaft tiefschwarz eingefärbt werden.

Bevorzugt für transparente Werkstoffe ist der Konzentrationsbereich von 0,01 bis 5 Gew.-%, insbesondere zwischen 0,05 und 3 Gew.-% an Pigmentruß. Zum Einsatz können insbesondere Ruße kommen mit Primärteilchengrößen zwischen 5 nm und 100 nm. Bevorzugt werden jedoch Primärteilchengrößen von 7 bis 60 nm, insbesondere von 7 bis 40 nm. Oftmals wird handelsübliches Pigment Black 7 eingesetzt. Selbst mit 0,01 bis 0,4 Gew.-% an Komponente B können tiefschwarze Formmassen erhalten werden.

Die Eindringtiefen der Farb-Polymerkombinationen mit Komponente B liegen in den o.g. Konzentrationsbereichen oftmals im Bereich von kleiner 40 µm. Als Eindringtiefe wird diejenige Tiefe unterhalb der Oberfläche definiert, bei welcher das eindringende Licht auf eine Intensität von ca. 1/e entsprechend ca. 37% abgefallen ist. Die Eindringtiefe kann mittels der bekannten Kubelka-Munk-Formel bei gegebener Farbrezeptur berechnet werden.

### Zur Komponente C

Die Menge der insgesamt eingesetzten Farbstoffe liegt üblicherweise bei 0,1 bis 1,5 Gew.-%, kann jedoch auch in einigen Fällen auch 0,5 bis 3,5 Gew.-% in Summe betragen. Auch kleinere Mengen, ab 0,05 % des einzelnen Farbstoffs, können bei hochtransparenten Werkstoffen und geringen Schichtdicken, z.B. mehr als 2mm, schon tiefschwarze Einfärbungen ergeben.

Die mittels dieser Methode eingefärbten thermoplastischen Formmassen zeigen einen sehr tiefschwarzen Farbeindruck mit L*-Werten von 0,5 bis 2,0, gemessen nach DIN 5033. Zur Messmethode: diffus / 8 Grad, exclusive Glanz - bei einem sehr hohen Glanzniveau von über 98 bei sowohl 20 / 60 / 85 Messwinkel.

Erfindungsgemäß können sogenannte Changier-Effekte (auch als Goniochromie bezeichnet) bei den Formmassen vermieden werden, welche an Spritzgussteilen Farb- und Helligkeitsunterschiede bei unterschiedlichen Beobachtungswinkeln hervorrufen.

Die Eindringtiefen der Farb-Polymerkombinationen mit Komponente C liegen in den o.g. Konzentrationsbereichen oftmals im Bereich von 150 µm und darüber.

Zusatzstoff-Komponenten D:
Neben den Komponenten A, B und C, können die erfindungsgemäßen Formmassen einen oder mehrere, von den Komponenten A, B und C verschiedene Zusatzstoffe bzw. Additive, die für Kunststoffmischungen typisch und gebräuchlich sind, enthalten. Die Zusammensetzungen enthalten Komponente D zu 0 bis 5 Gew.-%, insbesondere von 0,1 bis 5 Gew.-%.

Als solche Zusatzstoffe bzw. Additive seien beispielsweise genannt: Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind.

Das Dosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, lodide), die sich von Metallen der Gruppe I des Periodensystems der Elemente ableiten (wie Li, Na, K, Cu).

Als Komponente D geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen - sofern vorhanden - im Bereich von 0,05 bis 1 Gew.-% (bezogen auf das Gesamtgewicht der erfindungsgemäßen Formmassen).

Auch Siliconöle, oligomeres Isobutylen oder ähnliche Stoffe kommen als Zusatzstoffe in Frage, die üblichen Mengen betragen, sofern vorhanden, 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls im Prinzip verwendbar. Diese bedürfen jedoch einer Abstimmung mit Komponente C und werden in der Regel nicht verwendet.

Verarbeitungshilfsmittel und Stabilisatoren, Schmiermittel und Antistatika werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Die Herstellung der erfindungsgemäßen Formmassen aus den Komponenten kann nach jeder beliebigen Weise nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten, z. B. bei Temperaturen im Bereich von 160 bis 400°C, bevorzugt von 180 bis 280°C, wobei die Komponenten, in einer bevorzugten Ausführungsform, zuvor aus den bei den jeweiligen Herstellschritten erhaltenen Reaktionsmischungen teilweise oder vollständig isoliert worden sind.

Die erfindungsgemäßen Formmassen können durch Spritzguss verarbeitet oder z. B. zu Folien oder Formkörpern verarbeitet werden. Diese Folien, Spritzguss-Teile oder Formkörpern sind insbesondere für den Einsatz im Automobilaußenbereich, d.h. unter Witterungseinfluss, geeignet.

Die Erfindung wird durch die nachfolgenden Beispiele und Patentansprüche näher erläutert.

### Beispiel 1

Es werden tiefschwarze thermoplastische Formmassen auf Basis von SAN- und AM-SAN-Copolymeren hergestellt und untersucht.

Bei Einsatz (einer Summe) von 1,1 Gew.-% an Komponente C und dem Zusatz von Komponente B (Pigment Black 7) in einer Menge von 0,1 Gew.-% ergab sich eine tiefschwarze thermoplastische Formmasse (auf Basis von SAN bzw. AM-SAN (Luran^{®} HH-120)). Die damit hergestellten Spritzgussteile zeigen einen geringen Changier-Effekt. Die berechnete Eindringtiefe liegt bei 60µm. Die eingesetzte Ruß-Komponente B (Pigment Black) hatte einen Primärteilchendurchmesser von ca. 25 nm.

Die eingesetzten transparenten Polymere A (mit einem maximalen Haze von 25 % bei 2 mm nach ISO 14782), wurden eingefärbt (als Komponente C) mit einer Kombination von 2 oder 3 Farbstoffen (dyes), welche im Polymer löslich sind und in Kombination einen schwarzen Farbton erzeugen. Die Farbstoffe wurden in einer eingesetzten Summenmenge von 0,05 % bis 3,5 %, bevorzugt in Summenmengen von 0,2 % bis 2,5 %, insbesondere in Summenmengen von 0,35 % bis 1,6 % verwendet.

Bei der Herstellung der Formmassen wird als Komponente B eine Ruß-Menge (Pigment Black 7) von 0,01 % bis 3 % getestet, bevorzugt eine Menge von 0,02 % bis 0,8 %, insbesondere von 0,03 % bis 0,4 %. Das Pigment Black soll einen Primärteilchendurchmesser von 5 bis 30 nm aufweisen.

Die durch einfache Vermischung der Komponenten herstellbaren Formmassen führten nach der Extrussion und der Herstellung von quadratischen Probekörpern mit 2 mm Dicke zu einem sehr tiefschwarzen Farbeindruck und einen sehr hohen Glanz. Die Formmassen konnten auch Spritzguß-technisch einfach verarbeitet werden und riefen einen sehr geringen Changiereffekt hervor. Die Eindringtiefe der eingesetzten Farbmittelkombinationen lag im Bereich von 50 bis 90 µm. Diese geringe Eindringtiefe führte auch zu einem geringeren Changiereffekt.

Auch hatten die hergestellten Formteile bzw. Spritzgussteile eine hohe Witterungsbeständigkeit, beispielsweise bei Temperaturen über 30°C.

**Tabelle 1**

| Polymer | Pigmentierung | Helligkeit L* excl. Glanz | Glanzwert 20grad | Beurteilung | Changiereffekt |
|---|---|---|---|---|---|
| SAN | 0,5% Ruß | 6,0 | 99 | mittleres Schwarz, hoher Glanz | sehr gering |
| SAN | 1,5% Ruß | 3,5 | 91 | dunkles Schwarz, geringer Glanz | sehr gering |
| SAN | 0,5% Farbstoffe | 0,5 | 100 | dunkles Tiefschwarz, sehr hoher Glanz | sehr hoch !! |
| SAN | 1,1% Farbstoffe C, 0,1% Ruß | 1,1 | 100 | dunkles Tiefschwarz, sehr hoher Glanz | gering |
| ABS z. Vergleich | 1,5% Ruß | 7,2 | 94 | mittleres Schwarz, geringer Glanz | hoch |

Als Komponente C wurde eine Kombination aus den drei folgenden Farbstoffen:
Solvent Violet 13
Solvent Yellow 93 und
Solvent Violett 59
im Gewichtsverhältnis 7 : 2 : 1 verwendet.

Weitere SAN-Einfärbungen werden mit folgenden Kombinationen der Komponente C Getestet, wobei verschiedenen Mengenverhältnisse einsetzbar sind:
a) Solvent Blue 97
   Solvent Violet 59 und
   Solvent Red 135
b) Solvent Red 135
   Solvent Blue 97 und
   Solvent Violet 59
c) Solvent Red 135 und
   Solvent Blue 97.

Neben dem genannten SAN (Luran®, Styrolution) werden auch Luran® HH-120; (AMSAN, Styrolution), Plexiglas® 8N (Evonik Industries) und Makrolon ® (Bayer AG) unter Einsatz der Kombination aus B und C tiefschwarz eingefärbt.

## Patentansprüche

1. Schwarze thermoplastische Formmassen mit hohem Glanz enthaltend:
a. 90 bis 99,5 Gew.-% eines oder mehrerer Styrol-Copolymere als Komponente A1,
b. 0,01 bis 5 Gew.-% eines Pigmentrußes als Komponente B,
c. 0,1 bis 1,5 Gew.-% mindestens zweier, in der Formmasse löslicher Farbstoffe als Komponente C,
d. 0 bis 5 Gew.-% eines oder mehrerer Zusatzstoffe, die von den Komponenten B und C verschieden sind, als Komponente D,
wobei die thermoplastischen Formmassen einen tiefschwarzen Farbeindruck mit L*-Werten von 0,5 bis 2,0 (nach DIN 5033) und einen hohen Glanz von über 98 (nach DIN 67530) haben, und
wobei die Gewichtsprozente jeweils auf das Gesamtgewicht der Komponenten A bis D bezogen sind und zusammen 100 Gewichtsprozent ergeben.

2. Thermoplastische Formmassen nach Anspruch 1, **dadurch gekennzeichnet, dass** die Komponente C mindestens drei unterschiedliche Farbstoffe umfasst, die komplementäre Farbbereiche abdecken.

3. Thermoplastische Formmassen nach Anspruch 1 oder 2, **dadurch gekennzeichnet, dass** die Formmasse als Komponente B 0,01 bis 5 Gew.-% eines Pigmentrußes enthält, der eine mittlere Primärteilchengröße im Bereich von 5 bis 100 nm, vorzugsweise 7 bis 60 nm aufweist.

4. Thermoplastische Formmassen nach einem der Ansprüche 1 bis 3, **dadurch gekennzeichnet, dass** man als Komponente A ein Copolymer aus Acrylnitril, Styrol und/oder α-Methylstyrol, Phenylmaleinimid, Maleinsäureanhydrid, Methacrylsäuremethylester oder deren Mischungen einsetzt.

5. Thermoplastische Formmassen nach einem der Ansprüche 1 bis 4, **dadurch gekennzeichnet, dass** man als Komponente A ein Copolymer aus Acrylnitril, Styrol und/oder α-Methylstyrol einsetzt und der Gewichtsanteil von Acrylnitril bezogen auf Komponente A 19 bis 39 Gew.-% beträgt.

6. Thermoplastische Formmassen nach einem der Ansprüche 1 bis 5, **dadurch gekennzeichnet, dass** als Komponente A ein Styrol / Acrylnitril-Copolymer oder ein α-Methyl-Styrol / Acrylnitril-Copolymer eingesetzt wird.

7. Thermoplastische Formmassen nach einem der Ansprüche 1 bis 6, **dadurch gekennzeichnet, dass** als Komponente A ein transparentes Styrol / Acrylnitril-Copolymer oder ein transparentes α-Methyl-Styrol / Acrylnitril-Copolymer mit einer Schmelzevolumenrate (MVR, 220/3.8) von 4 bis 22 cm³/10 min eingesetzt wird.

8. Thermoplastische Formmassen nach einem der Ansprüche 1 bis 4, **dadurch gekennzeichnet, dass** als Komponente A ein Styrol / Methacrylsäuremethylester-Copolymer eingesetzt wird, wobei der Gewichtsanteil MMA, bezogen auf Komponente A, bei 19 bis 31 Gew.-% liegt.

9. Thermoplastische Formmassen nach einem der Ansprüche 1 bis 8, **dadurch gekennzeichnet, dass** der Gewichtsanteil von B 0,05 bis 3 Gew.-% beträgt.

10. Thermoplastische Formmassen nach einem der Ansprüche 1 bis 9, **dadurch gekennzeichnet, dass** der Gewichtsanteil von C 0,5 bis 1,2 Gew.-% beträgt.

11. Thermoplastische Formmassen nach einem der Ansprüche 1 bis 10, **dadurch gekennzeichnet, dass** die Komponenten B zu C im Gewichtsverhältnis von 3:1 bis 1:15 einsetzt werden.

12. Verwendung der thermoplastischen Formmassen nach einem der Ansprüche 1 bis 11 zur Herstellung von Formteilen mit tiefschwarzer Oberfläche und hohem Glanz für den Einsatz bei Kraftfahrzeugen, Haushaltsgeräten, Elektrogeräten, Zierleisten und Außenverkleidungen.

13. Verwendung der thermoplastischen Formmassen gemäß Anspruch 12 im Außenbereich von Kraftfahrzeugen, wie z.B. A-, B-, C- oder D-Säulen-abdeckungen, Spoiler, Fensterrahmen, Deckleisten, Abdeckhaube und Abdeckplatten oder als Teil des Kühlergrills, der Antennenverkleidung, des Seitenspiegels oder der Vor- und Rückleuchten.

14. Verfahren zur Herstellung einer thermoplastischen Formmasse nach einem der Ansprüche 1 bis 11, **dadurch gekennzeichnet, dass** man die Komponenten A, B und C, sowie ggf. D miteinander vermischt.

## Claims

1. A black thermoplastic molding composition with high gloss, comprising:
a. from 90 to 99.5% by weight of one or more styrene copolymers as component A1,
b. from 0.01 to 5% by weight of a carbon black pigment as component B,
c. as component C, from 0.1 to 1.5% by weight of at least two dyes soluble in the molding composition,
d. as component D, from 0 to 5% by weight of one or more additional substances different from components B and C,
where the thermoplastic molding compositions have a deep-black color with L*-values from 0,5 to 2,0 (measured in accordance with DIN 5033) and a high gloss of more than 98 (measured in accordance with DIN 67530), and
where each of the percentages by weight is based on the total weight of components A to D, and these give a total of 100 percent by weight.

2. The thermoplastic molding composition as claimed in claim 1, **characterized in that** component C comprises at least three different dyes which cover complementary color regions.

3. The thermoplastic molding composition as claimed in claim 1 or 2, **characterized in that** the molding composition comprises, as component B, from 0.01 to 5% by weight of a carbon black pigment which has an average primary particle size in the range from 5 to 100 nm, preferably 7 to 60 nm.

4. The thermoplastic molding composition as claimed in any of claims 1 to 3, **characterized in that** component A used comprises a copolymer of acrylonitrile, styrene, and/or α-methylstyrene, phenylmaleimide, maleic anhydride, methyl methacrylate, or a mixture of these.

5. The thermoplastic molding composition as claimed in any of claims 1 to 4, **characterized in that** component A used comprises a copolymer of acrylonitrile, styrene, and/or α-methylstyrene, and the proportion by weight of acrylonitrile, based on component A, is from 19 to 39% by weight.

6. The thermoplastic molding composition as claimed in any of claims 1 to 5, **characterized in that** component A used comprises a styrene/acrylonitrile copolymer or an α-methylstyrene/acrylonitrile copolymer.

7. The thermoplastic molding composition as claimed in any of claims 1 to 6, **characterized in that** component A used comprises a transparent styrene/acrylonitrile copolymer or a transparent α-methylstyrene/acrylonitrile copolymer with a melt volume rate (MVR, 220/3.8) of from 4 to 22 cm³/10 min.

8. The thermoplastic molding composition as claimed in any of claims 1 to 4, **characterized in that** component A used comprises a styrene/methyl methacrylate copolymer, where the proportion by weight of MMA, based on component A, is from 19 to 31% by weight.

9. The thermoplastic molding composition as claimed in any of claims 1 to 8, **characterized in that** the proportion by weight of B is from 0.05 to 3% by weight.

10. The thermoplastic molding composition as claimed in any of claims 1 to 9, **characterized in that** the proportion by weight of C is from 0.5 to 1.2% by weight.

11. The thermoplastic molding composition as claimed in any of claims 1 to 10, **characterized in that** the ratio by weight of component B used to component C used is from 3:1 to 1:15.

12. The use of the thermoplastic molding compositions as claimed in any of claims 1 to 11 for the production of moldings with deep-black surface and high gloss for the use in motor vehicles, household appliances, electrical equipment, decorative strips, and outdoor cladding.

13. The use of the thermoplastic molding compositions as claimed in claim 12 in the exterior region of motor vehicles, e.g. A-, B-, C-, or D-pillar cladding, spoilers, window frames, cover strips, hood, and panels, or as part of the radiator grille, of the antenna cladding, of the side mirror, or of the front or rear lamps.

14. A process for the production of a thermoplastic molding composition as claimed in any of claims 1 to 11, **characterized in that** components A, B, and C, and also optionally D, are mixed with one another.

## Revendications

1. Mélanges à mouler thermoplastiques noirs, à brillant élevé, contenant:
a. 90 à 99,5 % en poids d'un ou plusieurs copolymères du styrène, en tant que Composant A1,
b. 0,01 à 5 % en poids d'un noir de carbone, en tant que Composant B,
c. 0,1 à 1,5 % en poids d'au moins deux colorants solubles dans le mélange à mouler, en tant que Composant C,
d. 0 à 5 % en poids d'un ou plusieurs additifs, qui sont différents des Composants B et C, en tant que Composant D,
les mélanges à mouler thermoplastiques ayant une impression colorée noir profond, avec des grandeurs L* de 0,5 à 2,0 (selon DIN 5033) et un brillant élevé, supérieur à 98 (selon DIN 67530), et
chacun des pourcentages en poids étant rapporté au poids total des Composants A à D, et leur total faisant 100 pourcents en poids.

2. Mélanges à mouler thermoplastiques selon la revendication 1, **caractérisés en ce que** le Composant C comprend au moins trois colorants différents, qui recouvrent des gammes chromatiques différentes.

3. Mélanges à mouler thermoplastiques selon la revendication 1 ou 2, **caractérisé en ce que** le mélange à mouler contient en tant que Composant B 0,01 à 5 % en poids d'un noir de carbone qui présente une granulométrie primaire moyenne comprise dans la plage de 5 à 100 nm, de préférence de 7 à 60 nm.

4. Mélanges à mouler thermoplastiques selon l'une des revendications 1 à 3, **caractérisés en ce qu'**on utilise en tant que Composant A un copolymère d'acrylonitrile, de styrène et/ou d'α-méthylstyrène, de phénylmaléimide, d'anhydride maléique, de l'ester méthylique de l'acide méthacrylique, ou de mélanges de ceux-ci.

5. Mélanges à mouler thermoplastiques selon l'une des revendications 1 à 4, **caractérisés en ce qu'**on utilise en tant que Composant A un copolymère d'acrylonitrile, de styrène et/ou d'α-méthylstyrène, et que la proportion pondérale de l'acrylonitrile, par rapport au Composant A, est de 19 à 39 % en poids.

6. Mélanges à mouler thermoplastiques selon l'une des revendications 1 à 5, **caractérisés en ce qu'**on utilise en tant que Composant A un copolymère styrène/acrylonitrile ou un copolymère α-méthylstyrène/acrylonitrile.

7. Mélanges à mouler thermoplastiques selon l'une des revendications 1 à 6, **caractérisés en ce qu'**on utilise en tant que Composant A un copolymère styrène/acrylonitrile transparent ou un copolymère α-méthylstyrène/acrylonitrile transparent, ayant un indice de fluidité en volume (MVR, 220/3,8) de 4 à 22 cm³/10 min.

8. Mélanges à mouler thermoplastiques selon l'une des revendications 1 à 4, **caractérisés en ce qu'**on utilise en tant que Composant A un copolymère styrène/ester méthylique de l'acide méthacrylique, la proportion pondérale du MMA, rapportée au Composant A, étant de 19 à 31 % en poids.

9. Mélanges à mouler thermoplastiques selon l'une des revendications 1 à 8, **caractérisés en ce que** la proportion pondérale de B est de 0,05 à 3 % en poids.

10. Mélanges à mouler thermoplastiques selon l'une des revendications 1 à 9, **caractérisés en ce que** la proportion pondérale de C est de 0,5 à 1,2 % en poids.

11. Mélanges à mouler thermoplastiques selon l'une des revendications 1 à 10, **caractérisés en ce que** les Composants B et C sont utilisés selon un rapport en poids de 3:1 à 1:15.

12. Utilisation des mélanges à mouler thermoplastiques selon l'une des revendications 1 à 11 pour la fabrication d'objets moulés ayant une surface noir profond et un brillant élevé pour une utilisation dans les véhicules à moteur, les appareils ménagers, les appareils électriques, les moulures-enjoliveurs et les garnitures extérieures.

13. Utilisation des mélanges à mouler thermoplastiques selon la revendication 12 dans le domaine extérieur de véhicules à moteur, notamment p.ex. les recouvrements des montants A, B, C ou D, les becquets, les cadres de fenêtre, les moulures de recouvrement, le capot et les plaques de recouvrement, ou en tant qu'élément de la calandre de radiateur, du revêtement d'antenne, du rétroviseur extérieur ou des feux avant et arrière.

14. Procédé de fabrication d'un mélange à mouler thermoplastique selon l'une des revendications 1 à 11, **caractérisé en ce qu'**on mélange les uns aux autres les Composants A, B et C, ainsi qu'éventuellement D.
